# EUROPEAN PATENT SPECIFICATION

(11) **EP 2 548 480 B1**
(45) Date of publication and mention of the grant of the patent: **30.04.2014**
(21) Application number: 11755839.5
(22) Date of filing: 07.03.2011
(51) Int. Cl.: A47J 27/00, A47J 36/04, F24C 7/02

(54) **COOKING APPARATUS AND HEATING DEVICE USING THE SAME**
KOCHVORRICHTUNG UND ERHITZUNGSVORRICHTUNG DAMIT
APPAREIL DE CUISSON ET DISPOSITIF DE CHAUFFAGE L'UTILISANT

(30) Priority: 17.01.2011 JP 2011006592; 19.08.2010 JP 2010183570; 19.03.2010 JP 2010063824
(43) Date of publication of application: 23.01.2013
(73) Proprietor: Panasonic Corporation, Kadoma-shi Osaka 571-8501 (JP)
(72) Inventor: FUKUDA, Hiroshi, Chuo-ku Osaka 540-6207 (JP); SHIMADA, Yoshiharu, Chuo-ku Osaka 540-6207 (JP); KAWAI, Hiroshi, Chuo-ku Osaka 540-6207 (JP)
(74) Representative: Schwabe - Sandmair - Marx
(86) International application number: PCT/JP2011/001306
(87) International publication number: WO 2011/114646

(56) References cited:
- DE-A1- 2 247 967
- JP-A- 2 306 578
- JP-A- 11 163 582
- JP-A- 2003 225 165
- JP-A- 2003 276 129
- JP-A- 2009 083 131
- JP-A- 2010 006 617
- US-A- 5 079 398
- US-A1- 2006 237 451

## Description

### TECHNICAL FIELD

The present invention relates to a cooking apparatus such as a grill pan for cooking food by using heat of a heat generation layer for generating heat by absorbing energy of microwave emitted and a heating device using the same.

### BACKGROUND ART

In recent years, a microwave heating device such as a microwave oven has, in addition to a microwave heating function of heating food by emitting microwaves directly to food to heat the food, a cooking function using a cooking apparatus, so-called a grill pan, which is installed in the microwave heating device. Hereinafter, the function will be called a grill pan cooking function.

In the grill pan cooking function, a grill pan in which a heat generation layer made of a microwave heat generator of absorbing microwave energy and generating heat is formed is installed in a heating chamber, and food is placed on the grill pan and cooked by using heat generated from the heat generation layer by irradiation of the microwave energy.

Conventionally, a grill pan provided with a heat generation layer made of a microwave heat generator of absorbing microwave energy and generating heat has a configuration as shown in FIGS. 8 and 9 (refer to, for example, PTL 1). The conventional technique will be described with reference to the drawings.

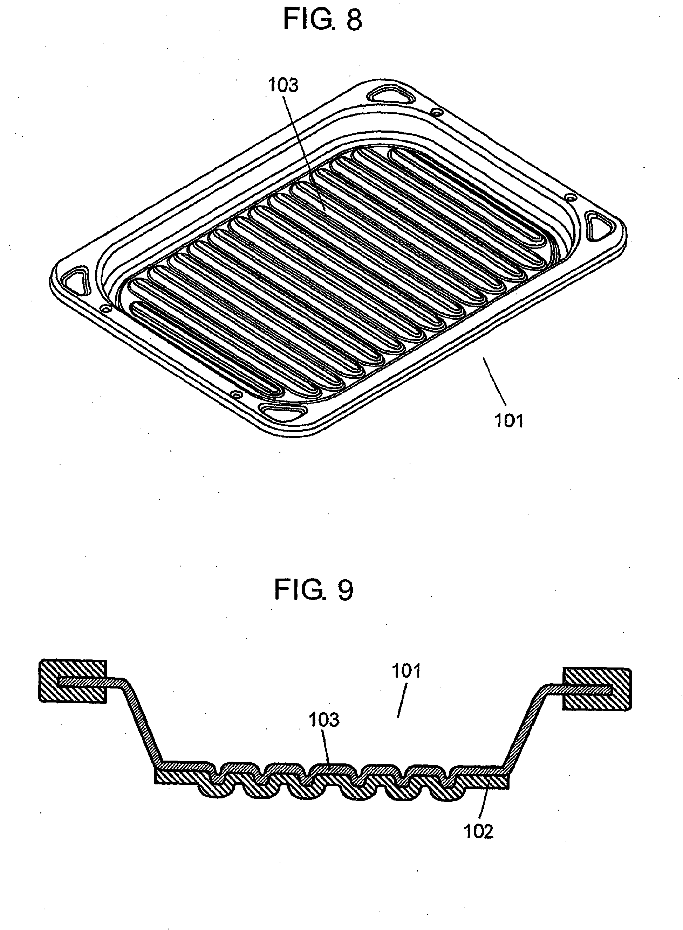

FIG. 8 is a perspective view of a grill pan provided with a heat generation layer made of a conventional microwave heat generator described in PTL 1. FIG. 9 is a cross section of the grill pan provided with the heat generation layer made of the microwave heat generator. As shown in FIGS. 8 and 9, heat generation layer 102 made of a microwave heat generator is provided in the bottom face of grill pan 101.

As shown in FIG. 9, heat generation layer 102 made of a microwave heat generator is provided on the rear face of placing face 103 on which food of grill pan 101 is put. On placing face 103, a coating layer made of fluorine material is formed to suppress burning of food and to improve performance of cleaning of the grill pan after cooking.

Heat generation layer 102 made of the conventional microwave heat generator is made of a compound of powders of microwave absorbing material which absorbs microwave energy and generates heat and a silicone rubber material. The powders of the microwave absorbing material are kneaded with the rubber material, and a mixture in a state where the particles of the microwave absorbing material are uniformly dispersed in the rubber material is adhered to a metal face or a coating face as the base material of the grill pan by a method of hot press or the like to form heat generation layer 102.

Grill pan 101 on which food is placed is disposed in a predetermined position in a microwave heating device having a magnetron for generating microwaves, and grill cooking is started. The microwave energy generated from the magnetron is absorbed by heat generation layer 102 made of the microwave heat generator and provided for grill pan 101 and is converted to heat. Consequently, placing face 103 of grill pan 101 is heated, and the food put on placing face 103 is cooked.

Generally, to satisfy both taste and browning suitable for eating in the grill cooking, the temperature of placing face 103 of grill pan 101 has to be increased to high temperature in short time. However, a microwave absorbing material satisfying both excellent temperature rise speed and increase in achieving temperature has not been found yet. Conventionally, as the microwave absorbing material of heat generation layer 102 made of the microwave heat generator, Mn-Zn based ferrite selected from the viewpoint of a material which absorbs microwave energy and generates heat is used.

According to PTL 2, a cooking apparatus obtained by providing the rear face of a metal plate disposed in a rotating body of a turn table with a heat generation layer made of a microwave heat generator is known. For the heat generation layer made of the microwave heat generator, a ferrite material which is selected because its Curie temperature is lower than the highest temperature of the metal plate during cooking is used.

When the temperature reaches the Curie temperature, absorption of the microwave of the ferrite material stops. By using the ferrite material having the Curie temperature lower than the highest temperature in cooking for the heat generation layer made of the microwave heat generator, the ferrite itself controls absorption and stop of the microwaves, so that the temperature of the metal plate is maintained uniformly.

However, the Curie temperature of the ferrite used for the heat generation layer made of the microwave heat generator of the conventional grill pan is about 220°C or lower than temperature suitable for high-temperature cooking.

The heat generation layer using the ferrite absorbs the microwave energy and, when the temperature becomes around the Curie temperature, the absorption of the microwave energy decreases. Consequently, the temperature of the heat generation layer can be increased only to a temperature equal to or lower than 220°C.

As a result, in cooking of a hamburger steak, fish, and the like, to obtain appropriate browning, cooking time becomes longer. Further, simultaneously, a part of the microwave is absorbed by the food, and oil and water in the food is heated and vaporizes as steam. There is consequently a problem such that the food is dried and juiciness and tastiness is lost.

On the other hand, by adding the dielectric material such as a metal nitride to the ferrite material, the achieving temperature of the placing face of the grill pan can be increased to the level of 300°C. However, when the achieving temperature rises with the heating time, the temperature of the fluorine coating layer formed in the placing face of grill pan 101 and silicone rubber used for heat generation layer 102 made of the microwave heat generator exceeds the allowable heat resistant temperature. Consequently, there is a problem such that the grill pan is broken due to occurrence of peeling-off, cracking, or the like.

To address the problem, the temperature of the placing face of the grill pan has to be designed to be equal to or less than the allowable heat resistant temperature of the material of the grill pan by installing a temperature sensor, detecting the temperature of the placing face of the grill pan, and controlling the microwave output, or controlling the microwave output in accordance with lapse of the microwave heating time.

However, there may be a case that the temperature rises to high temperature of 300°C or higher by erroneous operation or failure of the sensor, an error in selecting a cooking menu, or cooking in a state where no food is placed (no-food cooking), and there is a problem that it is difficult to assure safety and reliability.

US-2006/237451 A1 describes an ovenware for microwave ovens which contain a composition comprising a susceptor which has a Curie point temperature of about 100°C. to about 300°C. and a thermoplastic or thermoset polymer are improved and said composition is in contact with the food or drink to be heated or cooked, and/or composition has a thermal conductivity of about 0.7 W/m°K. or more. Heat generated by absorption of microwave radiation by the susceptor is more readily conducted to the food being cooked when the thermal conductivity of the composition is high, particularly when the part containing the susceptor is relatively thick. The relatively low Curie point of the susceptor prevent overheating of the ovenware and food being cooked. Also described are designs for various pieces of ovenware containing this composition.

### Citation List

### Patent Literature

PTL 1: Unexamined Japanese Patent Publication No. 2006-52932
PTL 2: Unexamined Japanese Patent Publication No. H04-263705
PTL 3: US-2006/237451 A1

### SUMMARY OF THE INVENTION

The invention is defined by the subject-matter of independent claim 1. The dependent claims are directed to advantageous embodiments.

### ADVANTAGES OF THE INVENTION

Advantageously, the temperature of a placing face of a grill pan is increased to predetermined temperature in short time, and is saturated to the allowable heat resistant temperature or less of the material of the grill pan. In such a manner, shortening of the cooking time of food and prevention of excessive temperature rise of the grill pan are realized, and improvement in the performance of the grill pan cooking requiring high temperature in a microwave heating device and durability, safety, and reliability are realized.

A cooking apparatus of the present invention has a supporting member having a placing face on which food is placed, and a heat generation layer made of a microwave heat generator containing ferrite which absorbs microwave energy and generates heat, and has a configuration that the ferrite contains Fe₂O₃, MnO, and ZnO, and a ratio by weight of the Fe₂O₃ to the ZnO lies in a range of 11 to 24.

With such a configuration, in the cooking apparatus of the present invention, the temperature of the placing face can be increased to high temperature in short time, and the temperature of the grill pan can be set to the allowable heat resistant temperature of the material. Therefore, food cooking time can be shortened, and the performance of the grill pan cooking requiring high temperature can be improved. Further, breakage and deterioration in the material of the grill pan can be prevented, and durability and reliability can be improved.

A cooking apparatus of the present invention includes a base member having a placing face on which food is placed, and a heat generation layer formed on the surface of the base member and made of a microwave heat generator containing ferrite which absorbs microwave energy and generates heat, and has a configuration that temperature of the placing face is set to saturate from 240°C to 300°C in a state where the food is not placed thereon.

With such a configuration, it is designed so that saturation temperature of the food placing face becomes high temperature. Consequently, the temperature can be increased to predetermined cooking temperature in short time, and cooking time can be shortened. In addition, food can be appropriately browned without being dried, so that the performance of the grill pan cooking at high temperature can be improved.

By setting the highest temperature at which the food placing face saturates in a state where no food is placed to 300°C, the temperature of the grill pan as a cooking apparatus can be set to the allowable heat resistant temperature of the material or less. Therefore, deterioration and breakage of the material of the grill pan can be prevented, and safety, durability, and reliability can be improved.

Further, a heating device of the present invention has a heating chamber, a microwave generator for supplying microwave into the heating chamber, and the cooking apparatus disposed in the heating chamber.

With such a configuration, the performance of the grill pan cooking in the heating device can be improved.

### BRIEF DESCRIPTION OF DRAWINGS

FIG. 1 is a cross section of a grill pan as a cooking apparatus in a first embodiment of the present invention.
FIG. 2 is a partial cross section showing a detailed structure of the grill pan as a cooking apparatus in the first exemplary embodiment.
FIG. 3 is a schematic view showing the structure of a heat generation layer made of a microwave heat generator in the first exemplary embodiment.
FIG. 4 is a cross section of a heating device in which the grill pan as the cooking apparatus in the first exemplary embodiment is installed.
FIG. 5 is a perspective view showing a grill pan having another shape as the cooking apparatus in the first exemplary embodiment.
FIG. 6 is a graph of temperature rise characteristic showing the effect of the heat generation layer made of the microwave heat generator in the first exemplary embodiment.
FIG. 7 is a partial cross section showing a detailed structure of a grill pan as a cooking apparatus in a second exemplary embodiment of the present invention.
FIG. 8 is a perspective view of a grill pan as a conventional cooking apparatus.
FIG. 9 is a cross section of the grill pan as the conventional cooking apparatus.

### DESCRIPTION OF EMBODIMENTS

Hereinafter, exemplary embodiments of the present invention will be described with reference to the drawings. The present invention, however, is not limited to the exemplary embodiments.

### FIRST EXEMPLARY EMBODIMENT

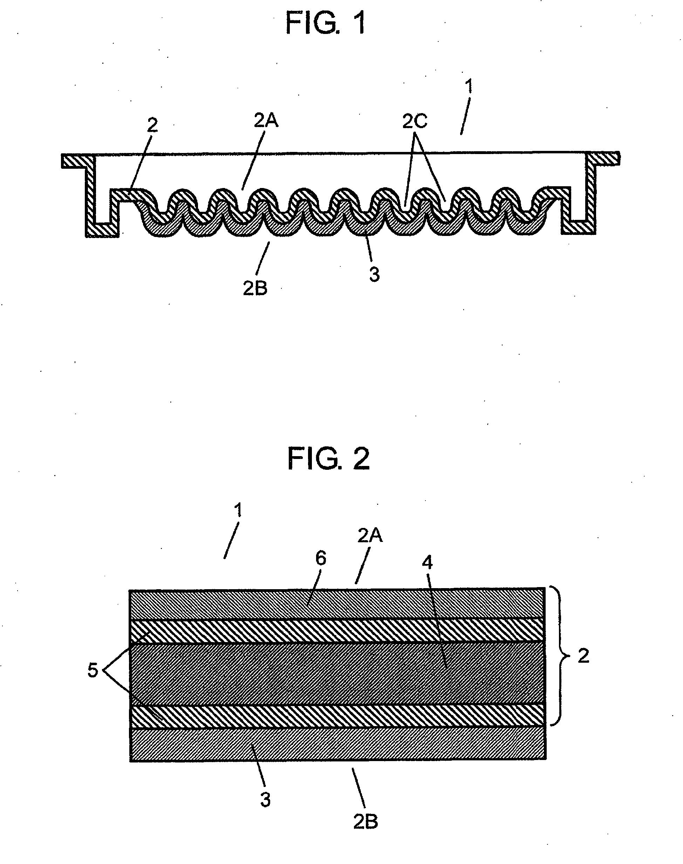

FIG. 1 is a cross section of a cooking apparatus (hereinbelow, described as grill pan) in which a microwave heat generator in a first exemplary embodiment of the present invention is formed. The grill pan of the exemplary embodiment has a shape similar to that of the conventional grill pan described with reference to FIG. 8.

In FIG. 1, grill pan 1 includes supporting member 2 having a plate shape, and heat generation layer 3 provided on one of the surfaces of supporting member 2 and made of a microwave heat generator for absorbing microwave energy and generating heat. As illustrated in FIG. 1, desirably, heat generation layer 3 made of a microwave heat generator is formed on surface 2B (corresponding to the rear face of grill pan 1) different from surface 2A on the side on which food is placed, of supporting member 2. As illustrated in FIG. 1, grill pan 1 has grooves 2C in the face on which food is placed so that fat or the like from the food is separated from the food.

FIG. 2 is a partial cross section showing a detailed structure of grill pan 1 in which heat generation layer 3 made of a microwave heat generator in the first exemplary embodiment is formed.

In FIG. 2, supporting member 2 of grill pan 1 includes base member 4 such as a metal base member, coating layers 5 whose main component is polyether sulfone resin material formed on both faces of base member 4, and fluorine coating layer 6 whose main component is fluorine resin, which is formed on coating layer 5 of surface 2A on the side on which food is placed. As base member 4 other than the metal base material, ceramics or heat-resistant glass such as crystallized glass can be also used. Since base member 4 other than the metal base material has high corrosion resistance, coating layer 5 whose main component is polyether sulfone resin material on the surface of the base material on heat generation layer 3 side is not always necessary. Consequently, the configuration of supporting member 2 of grill pan 1 can be simplified.

Heat generation layer 3 made of the microwave heat generator is formed on the surface of coating layer 5 in surface 2B different from surface 2A on which food is placed. As base member 4, an iron steel plate or a surface-treated steel plate on which aluminum or zinc is plated is applied.

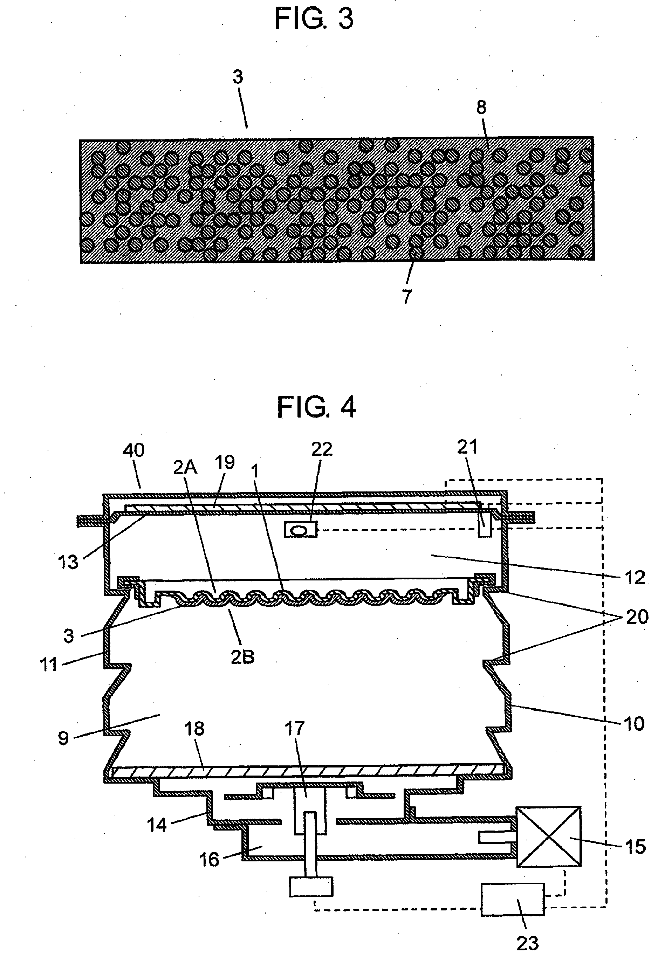

FIG. 3 is a schematic view showing the structure of heat generation layer 3 made of the microwave heat generator. In FIG. 3, heat generation layer 3 made of the microwave heat generator has a composition containing ferrite powders 7 which absorb microwave and generate heat and organic compound 8. Further, as necessary, a dispersant, a rubber antioxidant, an antioxidant, or the like is added. Ferrite powders 7 are uniformly dispersed in organic compound 8.

Next, an example of a method of manufacturing grill pan 1 in which heat generation layer 3 made of the microwave heat generator of the present invention is included will be described.

Both faces of base member 4 such as fused aluminum plated steel plate are coated with a paint whose main component is polyether sulfone resin material to form coating layers 5 and, after that, one of the surfaces of coating layers 5 is coated with a paint whose main component is fluorine resin to form fluorine coating layer 6. Subsequently, as shown in FIG. 1, press work is performed to form the shape of grill pan 1 so that fluorine coating layer 6 becomes a food placing face (surface 2A).

On the other hand, ferrite powders 7 used for heat generation layer 3 have to have the temperature rise characteristic which increases the temperature of the food placing face of grill pan 1 to high temperature in short time and is saturated at the allowable heat resistant temperature of grill pan 1 or less. Ferrite powders 7 realizing the characteristic contain Fe₂O₃, MnO, and ZnO, and the ratio by weight of Fe₂O₃ to ZnO is in the range of 11 to 24. Carbonate, lead nitrate, and the like including Fe, Mn, and Zn as starting materials are mixed at predetermined ratio and burned at high temperature to cause a reaction, thereby forming a composite oxide having the crystal structure of ferrite. By crushing the composite oxide of ferrite, ferrite powders 7 of predetermined the ratio by weight are obtained.

Ferrite powders 7 of predetermined blending quantity and the silicone rubber selected as organic compound 8 are kneaded by using a kneading processor such as an open roll rubber mixing mill or a kneader until ferrite powders 7 are uniformly dispersed in the silicone rubber. After that, cross-linking agent is added to the mixture and the mixture is kneaded again.

A necessary amount of the solid obtained by kneading or a sheet obtained by the open roll rubber mixing mill is taken and disposed on coating layer 5 of surface 2B different from the food placing face which is pressed to the shape of grill pan 1, and pressing and adhesion by hot pressing, and primary vulcanization are performed. After that, heat treatment such as secondary vulcanization is performed as necessary. As a result, heat generation layer 3 made of the microwave heat generator is formed, and grill pan 1 as a cooking apparatus of the exemplary embodiment is obtained.

A heat resistance agent for increasing the heat resistance of heat generation layer 3 made of the microwave heat generator at the time of kneading, an antioxidant and a fat agent for giving flexibility, or the like may be added as necessary.

To improve adhesion between heat generation layer 3 made of the microwave heat generator and coating layer 5, a primer having an adhering function is applied to the adhesion face of heat generation layer 3 made of the microwave heat generator or the face of coating layer 5, and heat generation layer 3 made of the microwave heat generator and coating layer 5 may be adhered to each other via the primer. Alternatively, an adhesive may be preliminarily added at the time of kneading of ferrite powders 7 and organic compound 8.

Although heat generation layer 3 made of the microwave heat generator is formed on coating layer 5 in the above-described manufacturing method, heat generation layer 3 may be directly adhered to the face (surface 2B) of base member 4 without providing coating layer 5 on surface 2B on which heat generation layer 3 is formed.

FIG. 4 is a cross section of a heating device in which grill pan 1 as the cooking apparatus in the exemplary embodiment is installed.

In FIG. 4, heating device 40 has heating chamber 9. Heating chamber 9 is constructed in an almost rectangular parallelepiped shape (including a cuboid) by right-side wall face 10, left-side wall face 11, deepest wall face 12, top face 13, bottom face 14, and a door (not shown) as a opening/closing wall face for taking food in/out from heating chamber 9, as metal boundary parts made of metal material. With the configuration, the supplied microwave energy is substantially confined in the heating chamber. The door is installed in a position (near side in FIG. 4) opposed to deepest wall face 12.

Magnetron 15 as a microwave generator as a component of heating device 40 of the exemplary embodiment generates microwave supplied to heating chamber 9. Heating device 40 is provided with waveguide 16 for guiding the microwave energy generated from magnetron 15 into heating chamber 9, and microwave radiator 17 for irradiating the inside of heating chamber 9 with the microwave energy from waveguide 16. Bottom face 14 is provided with sealing part 18 made of glass or ceramic material which transmits the microwave.

Heater 19 is provided in an upper part of heating chamber 9, and a convection heater unit (not shown) is provided at the back of deepest wall face 12 of heating chamber 9. With the configuration, heating device 40 has the functions of microwave cooking, grill cooking, and oven cooking of food.

Grill pan 1 as the cooking apparatus of the exemplary embodiment is inserted in heating chamber 9 along rails 20 as locking parts provided for right and left sidewall faces 10 and 11 of heating chamber 9 and disposed. In the exemplary embodiment, rails 20 are provided in three places in each of right and left sidewall faces 10 and 11. With the configuration, the installation height of grill pan 1 can be adjusted in three stages.

Heating chamber 9 also has thermistor 21 for detecting temperature in heating chamber 9 and infrared sensor 22 for detecting temperature of food, grill pan 1, or the like. Thermistor 21, infrared sensor 22, magnetron 15, and heater 19 are electrically connected to controller 23 controlling the operation of those components.

Next, the operation and action of grill pan 1 of the exemplary embodiment will be described using heating device 40 having the above-described configuration.

Grill pan 1 on which food (not shown) is placed is disposed on rails 20, and a predetermined instruction operation is performed in a state where the door is closed. In response to it, magnetron 15 is operated by controller 23 to generate microwave energy. The generated microwave energy passes through waveguide 16 and is emitted from microwave radiator 17 through sealing part 18 made of ceramics or the like into heating chamber 9.

The microwave energy emitted into heating chamber 9 is absorbed by heat generation layer 3 made of the microwave heat generator constructing grill pan 1 and converted to heat. The heat is transmitted to the placing face (surface 2A) on which food is placed of grill pan 1 and the food is heated.

The heat generation mechanism by the microwave of ferrite can be considered as follows.

The frequency of microwave used for a microwave heating device such as a microwave oven is 2.45 GHz. In a region where the frequency is high, the magnetic flux density (magnetization) as the magnetic characteristic of ferrite cannot follow the magnetic field, and magnetic loss occurs. The magnetic loss is expressed by the imaginary part of the complex relative permeability. The larger the value is, the higher the heat generating performance by absorption of microwave energy is.

On the other hand, when the temperature of ferrite increases, the magnetic flux density becomes lower, the imaginary part of the complex relative permeability becomes smaller, and the absorption amount of the microwave energy decreases. When the temperature of ferrite reaches the Curie temperature, the magnetic flux density becomes zero, the imaginary part of the complex relative permeability disappears, no heat is generated, and the temperature of ferrite does not increase.

As described above, since a preferable ferrite material to be applied to heat generation layer 3 made of the microwave heat generator used for grill pan 1 of the exemplary embodiment has fast temperature rise and is saturated at high temperature, preferably, the magnetic flux density of ferrite is high, the imaginary part of the complex relative permeability is large, and the Curie temperature is high.

By applying the ferrite having such characteristics, heat generation layer 3 having excellent heat generation performance using the microwave energy can be obtained.

The heat generation mechanism of ferrite is as described above. In addition, heat is generated by dielectric loss and conduction loss.

To make the placing face on which food is placed of grill pan 1 saturated at predetermined temperature, a ferrite material which generates heat only by the magnetic loss or a ferrite material which generates heat to a degree at which predetermined saturation temperature is not changed is preferable.

To assure long durability of coating layer 5, fluorine coating layer 6, and organic compound 8 used for heat generation layer 3 made of the microwave heat generator, constructing grill pan 1, the saturation temperature of the food placing face has to be set equal to or less than the allowable heat resistant temperature (300°C) for the material of grill pan 1.

On the other hand, in grill pan cooking, judging from the viewpoints of browning of food and shortening of cooking time, the saturation temperature of grill pan 1 is preferably high. However, in the case of mounting food, heat capacity of the food is added. Consequently, the temperature of a part in which the food is in contact with the placing face is lower than that of the food placing face of the grill pan in a state where there is no food.

Usually, the temperature of cooking of food requiring high temperature such as a hamburger steak or fish is around 200°C, the temperature of the food placing face of grill pan 1 for assuring the cooking temperature is 240°C or higher in a state where no food is placed, and the heat resistant temperature of the material of grill pan 1 is 300°C. Therefore, to satisfy both of the cooking performance and durability/reliability, preferably, the saturation temperature of grill pan 1 is set to 240°C to 300°C.

To realize it, a ferrite material having high saturation magnetic flux density and the imaginary part of the complex permeability which can increase the temperature rise speed from room temperature and having Curie temperature by which the saturation temperature of the food placing face of grill pan 1 becomes 240°C to 300°C is necessary.

The saturation temperature used in the following exemplary embodiments will be temperature at which saturation occurs in a state where there is no food on the food placing face of grill pan 1 (no-food cooking).

However, the ferrite material for the use of heat generation layer 3 made of the microwave heat generator is not commercially available. Most of ferrite materials are used for antinoise measures in a ferrite core or the like in a power supply line, a power supply transformer, or the like. Although the complex relative permeability at frequencies in the kHz to MHz bands of commercially available ferrite materials is disclosed, the characteristic of the frequency in the GHz band such as 2.45 GHz used for a microwave oven or the like is not disclosed.

Therefore, the useful ferrite material and its composition, satisfying the required specifications (that is, high saturated magnetic flux density, the existence of the imaginary part of the complex relative permeability, and saturation temperature of the food placing face of grill pan 1 of 240°C to 300°C) of heat generation layer 3, particularly, used for grill pan 1, as the microwave heat generator are unknown.

The inventors of the present invention searched for ferrite materials, examined the performances as the microwave heat generator and, as a result, found out that the ferrite core material used for a transformer of a power source among the various ferrite core materials is useful. The ferrite core is an Mn-Zn-based ferrite containing Fe₂O₃, MnO, and ZnO, its saturation magnetic flux density is about 550 mT, and its Curie temperature is about 290°C. By crushing the ferrite core, ferrite powders 7 were formed. Ferrite powders 7 were mixed with organic compound 8 (silicone rubber), and heat generation layer 3 made of the microwave heat generator was formed on the rear face of grill pan 1.

Using heating device 40 shown in FIG. 4, microwave power of 800 W was supplied. As a result, the inventors confirmed that the temperature rise speed is high from the room temperature to 200°C, and the highest temperature is saturated at about 280°C.

The inventors examined a ferrite material satisfying the requested specifications of grill pan 1 using the above-described commercially-available ferrite material. As a result, they found out that it is useful that the saturation magnetic flux density at 0°C when ferrite powders 7 are made as a sintered body is 400 mT or higher, the imaginary part of the complex relative permeability at room temperature when heat generation layer 3 contains ferrite powders 7 and organic compound 8 is 1.3 or larger at frequencies in the microwave region, and the Curie temperature of ferrite powders 7 is 250°C to 330°C.

Further, to examine the composition of the Mn-Zn-based ferrite for expressing the magnetic characteristic, using a grill pan on which a heat generation layer is formed by making ferrite powders obtained by changing the ratio by weight of Fe₂O₃ to ZnO and kneading the ferrite powders with silicone rubber as an organic compound, the temperature rise characteristic, the complex relative permeability, and the Curie temperature of the grill pan were evaluated. As a result, the inventors found that by setting the ratio by weight of Fe₂O₃ to ZnO to a range of 11 to 24, the temperature rise characteristic of grill pan 1 becomes excellent.

Specifically, in the case where the ratio by weight of Fe₂O₃ to ZnO in the ferrite powders is less than 11, the imaginary part of the complex relative permeability of the heat generation layer is less than 1.3, and the Curie temperature becomes less than 250°C. Consequently, the temperature rise of the food placing face of the grill pan is slow, the saturation temperature of the food placing face is less than 240°C, and the cooking performance deteriorates.

On the other hand, in the case where the ratio by weight of Fe₂O₃ to ZnO in the ferrite powders exceeds 24, although the temperature rise of the food placing face becomes faster, the Curie temperature exceeds 330°C. As a result, the saturation temperature of the food placing face increases to the allowable heat resistant temperature of 300°C or higher, so that the material of the grill pan deteriorates or is broken and cannot be used for long time as a cooking apparatus.

As described above, when the ratio by weight of Fe₂O₃ to ZnO is in the range of 11 to 24, the characteristics were obtained that the imaginary part of the complex relative permeability of heat generation layer 3 containing ferrite powders 7 is 1.3 or larger, and the Curie temperature of ferrite powders 7 is 250°C to 330°C. It was confirmed that the temperature of the food placing face (surface 2A) is saturated at 240°C to 300°C.

Therefore, by setting the ratio by weight of Fe₂O₃ to ZnO in ferrite powders 7 to the range of 11 to 24, the cooking performance, durability, and reliability can be realized.

By making that the Mn-Zn-based ferrite used as ferrite powders 7 contain Fe₂O₃, MnO, and ZnO and setting the ratio by weight of Fe₂O₃ to ZnO in the range of 11 to 24, the Curie temperature of the ferrite can be increased. Therefore, the temperature of the placing face of grill pan 1 can be set to high temperature, so that cooking time in the grill pan cooking can be shortened, and the cooking performance can be improved.

By making that the Mn-Zn-based ferrite used as ferrite powders 7 contain Fe₂O₃, MnO, and ZnO and setting the ratio by weight of Fe₂O₃ to ZnO in the range of 11 to 24, the Curie temperature of the ferrite powders can be increased to 250°C to 330°C. By increasing the Curie temperature of ferrite powder 7, saturation temperature of the food placing face (surface 2A) of grill pan 1 can be set to 240°C to 300°C higher than that of conventional grill pan.

Therefore, the temperature of the food placing face (surface 2A) of grill pan 1 can be set to high temperature, cooking time of grill pan cooking can be shortened, and the cooking performance can be improved.

In addition, when the temperature of ferrite powders 7 becomes around the Curie temperature, self-control is performed so that the absorption amount of the microwave energy becomes smaller. Consequently, the temperature of the food placing face can be saturated at the allowable heat resistant temperature of the material of grill pan 1 as a cooking apparatus or less, that is, 300°C or less.

By making the composition of ferrite powders 7 contain Fe₂O₃, MnO, and ZnO and setting the ratio by weight of Fe₂O₃ to ZnO in the range of 11 to 24 as described above, breakage, firing of the material of grill pan 1, and fire spreading to other members caused by excessive temperature rise of the material of grill pan 1 can be prevented. Therefore, durability and reliability can be improved.

Further, since a safety device for preventing excessive temperature rise of grill pan 1 is not necessary, no complicated electronic control and control device is required. Consequently, lower cost can be realized.

Although it has been described that the allowable heat resistant temperature of the material of grill pan 1 is 300°C, preferably, the upper limit of the saturation temperature of grill pan 1 is determined to 280°C lower than 300°C from the viewpoint of durability for long time and the saturation temperature is preferably set to 240°C to 280°C to satisfy also the cooking performance.

To realize the saturation temperature of grill pan 1 of 240°C to 280 °C, the Curie temperature of ferrite powders 7 used for heat generation layer 3 made of the microwave heat generator of the present invention is preferably 250°C to 300°C. The ratio by weight of Fe₂O₃ to ZnO in Mn-Zn-based ferrite powders 7 realizing the Curie temperature is preferably in the range of 11 to 17.5.

Further, to improve the cooking performance, the saturation temperature of grill pan 1 is preferably set to 260°C or higher. Further, to satisfy both the cooking performance and excellent durability and reliability, it is preferable to set the saturation temperature of grill pan 1 to 260°C to 280°C. The Curie temperature of ferrite powders 7 to set the saturation temperature of the food placing face (surface 2A) to 260°C to 280°C is preferably 280°C to 300°C, and the ratio by weight of Fe₂O₃ to ZnO in ferrite powder 7 to realize it is preferably in the range of 14.5 to 17.5.

More preferably, the ratio by weight of Fe₂O₃ to ZnO is 14.5 to 17.5 at which the Curie temperature becomes 280°C to 300°C.

The content of Fe₂O₃ of Mn-Zn-based ferrite powders 7 is preferably in the range of 70% by weight to 76% by weight when the ratio by weight of Fe₂O₃ to ZnO is in the range of 11 to 24.

In the case where the content of Fe₂O₃ is less than 70% by weight, the temperature rise speed decreases due to decrease in the magnetic characteristics (saturation magnetic flux density and the imaginary part of the complex relative permeability) contributing to temperature rise, and the Curie temperature becomes less than 240°C. In the case where the content exceeds 76% by weight, the temperature rise speed decreases due to decrease in the magnetic characteristics contributing to temperature rise, and the Curie temperature exceeds 330°C. That is, in the case where the content of Fe₂O₃ is out of the range of 70% by weight to 76% by weight, the object of the present invention cannot be achieved.

In the case where the range of the ratio by weight of Fe₂O₃ to ZnO in ferrite powders 7 is 11 to 17.5, and 14.5 to 1, the suitable content of Fe₂O₃ is 70% by weight to 74% by weight, and 72% by weight to 74% by weight, respectively.

Since ferrite powders 7 used for the first exemplary embodiment are saturated so that the temperature of the food placing face of grill pan 1 becomes the allowable heat resistant temperature of grill pan 1 or less by using a magnetic loss by the imaginary part of the complex relative permeability of heat generation layer 3 and the Curie temperature of ferrite powders 7, heat generation caused by other factors such as dielectric loss has to be lessened.

For example, when the imaginary part (dielectric loss) of the complex relative permeability of heat generation layer 3 containing ferrite powders 7 and silicone rubber as organic compound 8 is 0.7 or less, heat generation caused by the dielectric loss can be suppressed. Consequently, heat generation layer 3 made of the microwave heat generator can be saturated at predetermined temperature.

As the ferrite materials, in addition to the Mn-Zn-based ferrite, there are Mg-Zn-based ferrite and Ni-Zn-based ferrite. Any of those ferrite materials can be applied as long as it satisfies the preferable magnetic characteristics and the Curie temperature in the exemplary embodiment.

The temperature saturation phenomenon of the food placing face (surface 2A) occurs when the heat generation amount of heat generated when heat generation layer 3 made of the microwave heat generator absorbs the microwave energy and the amount of heat dissipation caused by conduction, convection, and radiation from heated grill pan 1 are balanced. That is, in the first exemplary embodiment, the temperature of the placing face (surface 2A) which is saturated when heat generation of heat generation layer 3 and heat dissipation from grill pan 1 as a cooking apparatus are balanced in a state where no food is placed on the placing face (surface 2A) is set to 240°C to 300°C.

In the exemplary embodiment, when the temperature of ferrite powders 7 contained in heat generation layer 3 becomes around the Curie temperature, the saturation magnetic flux density and the imaginary part of the complex relative permeability as the characteristics of ferrite decrease, and absorption of the microwave energy decreases. Therefore, as the temperature of the food placing face becomes higher, the heat generation amount decreases, and the food placing face is saturated at temperature lower than the Curie temperature of ferrite powders 7.

When the temperature satisfying both the cooking performance of grill pan 1 and the allowable heat resistant temperature of the material is 240°C to 300°C, the Curie temperature of ferrite powders 7 used for heat generation layer 3 made of the microwave heat generator for bringing out saturation at the temperature is 250°C to 330°C.

By setting the saturation temperature of the food placing face (surface 2A) to high temperature of 240°C to 300°C, the temperature can be increased to predetermined cooking temperature in short time, so that cooking time can be shortened. Further, food can be appropriately browned without being dried, and the performance of the grill pan cooking at high temperature can be improved.

By setting the highest temperature at which the food placing face saturates in a state where no food is placed to 300°C, the temperature of the material of the grill pan as a cooking apparatus can be set to equal to or less than the allowable heat resistant temperature. Therefore, deterioration or breakage of the material of the grill pan can be prevented, and safety, durability, and reliability can be improved.

On the other hand, when the temperature of heat generation layer 3 becomes equal to or higher than the Curie temperature of ferrite powders 7 contained in heat generation layer 3, absorption of the microwave energy stops.

When irradiation of the microwave to heating chamber 9 is continued, there is the possibility of loss of safety and reliability in such a manner that the electric field of the microwave is concentrated in places other than heat generation layer 3 (such as right sidewall face 10, left sidewall face 11, deepest wall face 12, top face 13, bottom face 14, and the like) and a spark is generated, or the microwave is reflected in heating chamber 9, returns to magnetron 15 via waveguide 16, and microwave radiator 17 is broken.

In the exemplary embodiment, since the food placing face saturates at temperature lower than the Curie temperature of ferrite powders 7, ferrite powders 7 of heat generation layer 3 can maintain absorption of the microwave emitted to heating chamber 9.

Therefore, concentration of the electric field to the other members of heating chamber 9 and reflection of the microwave to magnetron 15 are suppressed, so that spark in heating chamber 9 and breakage of magnetron 15 can be prevented, and safety and reliability can be assured.

Although it varies according to kinds of food, preferably, time to bring the temperature of the food placing face of grill pan 1 to 200°C or higher is within two minutes empirically in the grill pan cooking. Consequently, at least in the temperature range from the room temperature to 200°C, the imaginary part of the complex relative permeability of heat generation layer 3 which absorbs the microwave energy has to be made large.

The imaginary part of the complex relative permeability at room temperature of heat generation layer 3 made of the microwave heat generator is preferably 1.3 or larger. By setting the imaginary part of the complex relative permeability to 1.3 or larger, absorption of the microwave energy of heat generation layer 3 can be made high, and rising of the temperature of the food placing face of grill pan 1 can be quickened. On the other hand, when the temperature of heat generation layer 3 rises, the imaginary part of the complex relative permeability of heat generation layer 3 becomes smaller due to decrease in the saturation magnetic flux density of ferrite powders 7. As a result, as the temperature of heat generation layer 3 rises, the temperature rise speed becomes slower, and time to reach the temperature necessary for cooking tends to become longer.

Therefore, to increase the temperature rise speed, it is necessary to suppress decrease in the imaginary part of the complex relative permeability in heat generation layer 3 in the range from room temperature to 200°C.

When the imaginary part of the complex relative permeability of heat generation layer 3 from the room temperature to 200°C is equal to or higher than 50% of the value of the imaginary part of the complex relative permeability at the room temperature, decrease in the temperature rise speed of heat generation layer 3 can be suppressed, and the temperature of the food placing face of grill pan 1 can be increased to 200°C or higher within two minutes.

It is considered that the temperature dependency of the imaginary part of the complex relative permeability is related to the saturation magnetic flux density and the Curie temperature of ferrite. When the saturation magnetic flux density becomes high and the Curie temperature becomes high, the imaginary part of the complex relative permeability increases.

Based on the above, to realize the excellent temperature rise performance of the food placing face of grill pan 1, preferably, the imaginary part of the complex relative permeability at room temperature of heat generation layer 3 is 1.3 or larger, and the imaginary part of the complex relative permeability at room temperature to 200°C is at least 50% of the value of the imaginary part of the complex relative permeability at the room temperature. In Mn-Zn-based ferrite powders 7 used for heat generation layer 3, when the ratio by weight of Fe₂O₃ to ZnO is in the range of 11 to 24, the imaginary part of the complex relative permeability of 1.3 or larger can be realized.

As a result, the temperature of the food placing face of grill pan 1 as a cooking apparatus can be increased to around the Curie temperature of ferrite powders 7 in short time. Thus, the cooking time can be further shortened, and the cooking performance can be further improved.

Since food which is in contact with the placing face of grill pan 1 can be quickly baked, sticking of the food to the placing face is suppressed, the food can be easily taken from the grill pan after cooking, and handling such as washing of the grill pan can be easily performed.

The complex relative permeability is measured by using a network analyzer and heating a sample holder to predetermined temperature by the S parameter method.

Examples of the material of organic compound 8 are rubber and resin having high heat resistance. By using organic compound 8, heat generation layer 3 made of the microwave heat generator containing ferrite powders 7 can be easily formed on grill pan 1 by the hot press work or the like.

Since organic compound 8 can realize firm adhesion between supporting member 2 and heat generation layer 3 of grill pan 1, durability can be improved.

In addition, since heat generation layer 3 can be formed at relatively low temperature, deterioration in the materials of grill pan 1 can be prevented.

As organic compound 8, particularly, silicone rubber and fluorine rubber are preferable. Particularly, silicone rubber has high heat resistance, and can further improve the adhesion between heat generation layer 3 and supporting member 2 of grill pan 1. Consequently, peeling-off and crack in heat generation layer 3 can be prevented, initial heat generating performance can be held for long time, and the performance of the grill pan cooking which is always stable can be realized.

Since silicone rubber has excellent heat resistance and resistance to chemicals, heat generation layer 3 having high durability and reliability can be realized.

Since heat generation layer 3 can be constructed thickly by using silicone rubber, a large amount of ferrite powders 7 necessary to absorb microwaves can be made contained.

With the configuration, the absorption amount of the microwave energy of ferrite powders 7 can be increased, so that the microwave heat generator having high temperature rise speed can be realized.

Grill pan 1 of the exemplary embodiment is heated by heat generation layer 3 made of the microwave heat generator. When grill pan 1 becomes larger, the amount of heat radiation from grill pan 1 increases, and the saturation temperature of the food placing face decreases. On the other hand, when grill pan 1 becomes smaller, the amount of heat radiation becomes smaller, and the saturation temperature of the food placing face increases.

It is sufficient to use ferrite powders 7 having the Curie temperature at which saturation occurs around the allowable heat resistant temperature of grill pan 1 in accordance with the amount of radiation from grill pan 1.

However, when investment for development and manufacture of novel ferrite matching such ferrite powders is considered, it is not practical. To effectively use ferrite powders 7 having characteristics such that the saturation magnetic flux density at 0°C when ferrite powders 7 are formed as a sintered body is 400 mT or higher, the imaginary part of the complex relative permeability at room temperature when heat generation layer 3 contains ferrite powders 7 and the silicone rubber is 1.3 or larger, the imaginary part of the complex relative permeability from room temperature to 200°C is at least 50% of the value of the imaginary part of the complex relative permeability at room temperature, and the Curie temperature of ferrite powders 7 is 250°C to 330°C, the area of heat generation layer 3 which is formed in grill pan 1 and whose main component is the heat generator has to be specified.

In grill cooking using grill pan 1, usually, microwave output around 800 W is used. In the case of heating grill pan 1 at 800 W, when the area of heat generation layer 3 exceeds 0.1 m², grill pan 1 becomes larger, and heat capacity increases. Consequently, it takes time to increase the temperature of the food placing face (surface 2A), and the temperature cannot be increased to 200°C within two minutes adapted to grill pan cooking.

The amount of heat radiation from the heated face also increases as the area of the food placing face becomes larger, and the saturation temperature of the food placing face (surface 2A) becomes less than 240°C. As a result, the cooking time becomes longer, and appropriate browning of food and tastiness cannot be obtained.

On the other hand, when the area of heat generation layer 3 becomes less than 0.05 m², the amount of ferrite powders 7 contained in heat generation layer 3 decreases, and absorption of the microwave energy of heat generation layer 3 becomes smaller. As a result, there are possibilities of generation of a spark due to concentration of the electric field of the microwave on members other than heat generation layer 3 and loss of durability and safety such as breakage of the magnetron caused by the reflected microwave. Absorption of the microwave energy by food also increases, and it causes disturbances to tastiness such as decrease in the amount of water in the food.

Therefore, by setting the area of heat generation layer 3 to 0.05 m² to 0.1 m², the temperature of the food placing face (surface 2A) can be increased in short time and the food placing face can be heated to predetermined saturation temperature. Therefore, excellent cooking performance can be realized.

Shortening of the cooking time and energy saving can be also realized. Further, breakage of the magnetron and generation of a spark can be prevented, and durability and safety of heating device 40 can be assured.

In the case of setting the saturation temperature of the food placing face (surface 2A) to 260°C to 280°C, the width of the balance between the microwave energy absorption amount of heat generation layer 3 and the amount of heat radiation from grill pan 1 becomes narrow. Consequently, the suitable range of the area of heat generation layer 3 is 0.06 m² to 0.08 m².

In the case where the thickness of heat generation layer 3 made of the microwave heat generator of the exemplary embodiment exceeds 2 mm, by increase in the heat capacity caused by increase in weight of heat generation layer 3 and decrease in heat transmission to the food placing face (surface 2A) caused by deterioration in heat conduction, the temperature rise speed of the food placing face (surface 2A) becomes slow. In addition, due to large thickness, the cost is high.

On the other hand, when the thickness of heat generation layer 3 is set to less than 0.5 mm, the amount of ferrite powders 7 becomes insufficient, and the saturation temperature of the food placing face (surface 2A) becomes low.

Therefore, to satisfy both improvement in the temperature rise speed and realization of the saturation temperature of the food placing face (surface 2A) of 240°C to 300°C, it is preferable to set the thickness of heat generation layer 3 to 0.5 mm to 2 mm. By setting the thickness of heat generation layer 3 to 0.5 mm to 2 mm, excellent cooking performance and shortening of the cooking time can be realized.

In the case of setting the saturation temperature of the food placing face to 260°C to 280°C, the width of the balance between the microwave energy absorption amount of heat generation layer 3 and the amount of heat radiation from grill pan 1 becomes narrow. Consequently, the suitable range of the thickness of heat generation layer 3 is 0.7 mm to 1.5 mm.

Further, to obtain the stable temperature rise performance, it is desirable to set the thickness of heat generation layer 3 to the range of 0.9 mm to 1.1 mm.

When the blending quantity of ferrite powders 7 increases, although the temperature rise performance of heat generation layer 3 improves, the following three problems occur.

First, adhesion between organic compound 8 and the food placing face deteriorates, and heat generation layer 3 tends to be easily peeled off. Second, the heat generator composition made of organic compound 8 and ferrite powders 7 becomes hard, and fluidity of the heat generator composition at the time of hot pressing is low, so that heat generation layer 3 having uniform thickness cannot be obtained. Consequently, heating unevenness of heat generation layer 3 increases, and the cooking performance deteriorates. Third, when thermal shock resistance and mechanical shock resistance decreases due to hardening of heat generation layer 3 formed and drop of grill pan 1 or repetition of cooling and heating occurs, heat generation layer 3 can be broken.

On the other hand, when the blending quantity of ferrite powders 7 decreases, the absorption performance of the microwave energy of heat generation layer 3 deteriorates, and satisfactory temperature rise performance cannot be obtained.

In the case where the saturation temperature of the food placing face is set to 240°C to 300°C, the blending quantity of ferrite powders 7 of heat generation layer 3 to solve the problem and to obtain heat generation layer 3 having excellent durability, temperature rise performance, and cooking performance is preferably in the range of 50% by weight to 90% by weight.

In the case where the saturation temperature of the food placing face is set to 260°C to 280°C, the width of balance between the microwave energy absorption amount of heat generation layer 3 and the amount of heat radiation from grill pan 1 becomes narrow. Consequently, a preferable range of the blending quantity of ferrite powders 7 is 65% by weight to 85% by weight. Further, to obtain stable temperature rise performance, it is preferable to set the blending quantity of ferrite powders 7 to the range of 75% by weight to 80% by weight.

When the microwave is irradiated in heating chamber 9, standing wave of the microwave is generated in heating chamber 9. As a result, variations in the level of the microwave energy occur in heating chamber 9, the absorption amount of the microwave of the face of heat generation layer 3 made of the microwave heat generator adhered to the bottom of grill pan 1 also varies according to the variations in the level of the microwave energy, and a non-uniform temperature distribution is resulted.

The higher the thermal conductivity of the material of supporting member 2 of grill pan 1 is, the more the material can efficiently transmit heat from heat generation layer 3, and the temperature distribution of the food placing face can be made uniform. However, when the thermal conductivity is too high, heat is transmitted also to places other than the food placing face, the amount of heat radiation from grill pan 1 increases, and the saturation temperature of the food placing face decreases.

On the other hand, the material whose thermal conductivity is too low as supporting member 2 cannot make the non-uniform temperature distribution which occurs in heat generation layer 3 uniform. Non-uniform browning of food occurs, and the cooking performance deteriorates.

Examples of a material whose thermal conductivity is too high are materials whose thermal conductivity is 200 W/m·K or higher such as aluminum and copper. Examples of a material whose thermal conductivity is too low are materials whose thermal conductivity is 10 W/m·K or less such as ceramics and glass. Those materials are not preferable as supporting member 2.

As supporting member 2 of grill pan 1 of the exemplary embodiment, a material whose thermal conductivity is 50 W to 150 W is preferable. Examples of the material include a steel plate whose main component is iron, a surface-treated steel plate which is plated with aluminum or zinc and whose main component is iron, and a surface-treated steel plate which is painted with a paint and whose main component is iron.

The thermal conductivity of the steel plate whose main component is iron is about 85 W/m·K and is lower than that of aluminum. However, the steel plate has high mechanical strength, and it reduces the thickness of supporting member 2. Consequently, thermal resistance from heat generation layer 3 to the food placing face can be reduced, and heat can be transmitted efficiently.

The uniformity of the temperature distribution of the steel plate whose main component is iron is lower than that of aluminum, but the steel plate can make the temperature distribution of the entire food placing face uniform.

Further, the steel plate whose main component is iron can increase thermal resistance in directions other than the direction to the food placing face from heat generation layer 3. Accordingly, heat loss to the directions other than the food placing face can be suppressed, so that the temperature of the food placing face can be saturated at high temperature.

More preferably, the thermal conductivity of supporting member 2 of grill pan 1 is 80 W/m·K to 150 W/m·K.

Although the object of grill pan 1 of the exemplary embodiment is to improve the performance of the grill pan cooking at high temperature, grill pan cooking which does not need high temperature such as thaw cooking and warming cooking can be handled by controlling output of the microwave power.

It is also useful to form heat generation layer 3 by mixing, to ferrite powders 7, dielectric powders whose Curie temperature is lower than that of ferrite powders 7 and whose dielectric loss is larger than magnetic loss.

In this case, since the saturation temperature of the food placing face is determined by the Curie temperature of ferrite, it can be set equal to or lower than the allowable heat resistant temperature of the material of grill pan 1, and durability and reliability can be assured.

Heat generation layer 3 constructed by mixing dielectric powders whose Curie temperature is higher than that of the ferrite powders with the ferrite powders whose Curie temperature is low can be also applied.

In this case, by providing the dielectric powders with a function of saturating at or less than the allowable heat resistant temperature of the material of grill pan 1, similar effects can be obtained.

Further, heat generation layer 3 constructed by mixing dielectric powders having large dielectric loss and ferrite powders having large magnetic loss, the dielectric powders and the ferrite powders having equivalent Curie temperature, can be also applied, and similar effects can be obtained.

The composition and blending of the ferrite powders and the dielectric powders are selected as necessary on the precondition that the powders have high temperature rise speed and the function of making the food placing face of grill pan 1 saturated at predetermined temperature in consideration of the advantages such as the manufacture, cost, adhesion to supporting member 2, applicability to use environment of heat generation layer 3 and the like.

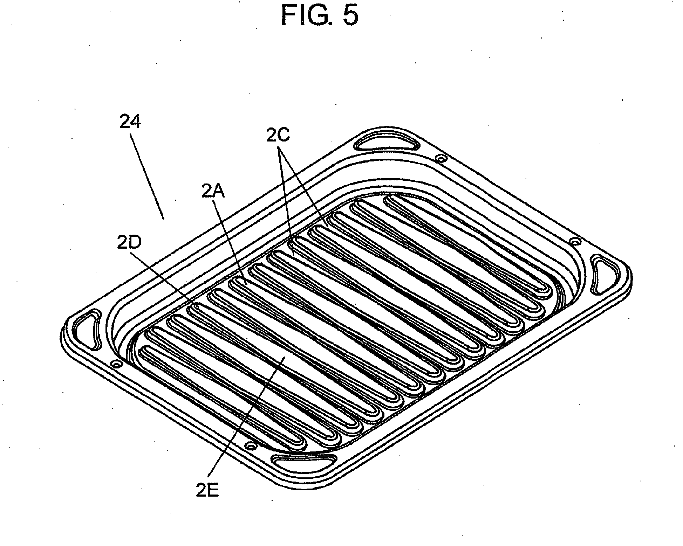

FIG. 5 is a perspective view showing a grill pan having another shape in the exemplary embodiment. Heat generation layer 3 made of the microwave heat generator of the exemplary embodiment can be also applied to the shape of the grill pan shown in FIG. 5.

As shown in FIG. 5, a placing face (surface 2A) on which food is placed of grill pan 24 has a configuration that center part 2E is wider than end part 2D. With the configuration, the area of the placing face in a center part of grill pan 24, having high possibility that food is placed, is enlarged.

In grill pan 24, the contact area between food and the placing face (surface 2A) can be enlarged. Consequently, the amount of heat transmitted from heat generation layer 3 to food can be made larger than that of grill pan 1 (refer to FIG. 1) having the same shape as that of FIG. 8, so that the cooking time can be shortened, and the performance of the grill pan cooking can be further increased.

By enlargement of the area of contact with food, non-uniform browning of food can be reduced, so that the food finishing state can be improved. Further, non-uniform drying of food can be also suppressed, so that juiciness and tastiness can be also improved.

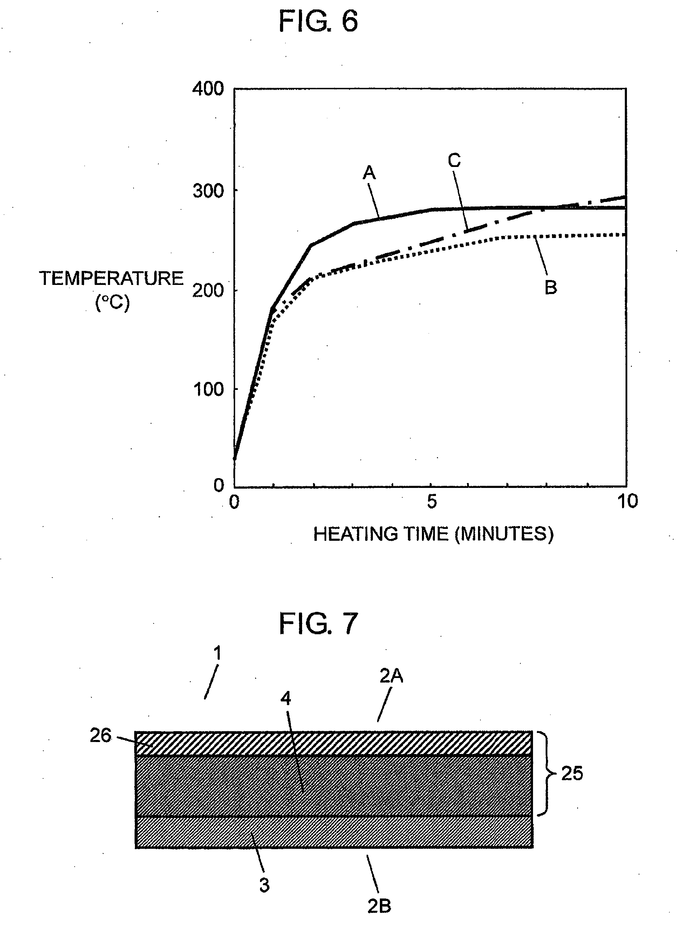

Next, concrete temperature characteristics of the first exemplary embodiment will be described. FIG. 6 is a graph of temperature rise characteristic showing the effect of heat generation layer 3 made of the microwave heat generator in the first exemplary embodiment. FIG. 6 shows a result of evaluation of the heat generation performance, by every heating time, of heat generation layer 3 made of the microwave heat generator when the heating device shown in FIG. 4 is used, grill pan 1 on which no food is placed is disposed in a predetermined position in heating chamber 9, and microwave power of 800 W is applied.

As comparative examples, grill pans in which two kinds of conventional heat generation layers made of microwave heat generators are formed were also similarly evaluated.

In FIG. 6, line A shows a temperature rise characteristic of the food placing face of grill pan 1 of the exemplary embodiment in which heat generation layer 3 made of the microwave heat generator is formed by using Mn-Zn-based ferrite powders 7 containing Fe₂O₃, MnO, and ZnO in which the Curie temperature is about 300°C, saturation magnetic flux density at 0°C is about 550 mT, and the ratio by weight of Fe₂O₃ to ZnO is 15.5.

Line B shows a temperature rise characteristic of a conventional heat generation layer as a comparison example, as a temperature rise characteristic of a food placing face of a grill pan in which heat generation layer 3 made of the microwave heat generator is formed by using Mn-Zn-based ferrite powders 7 in which the ratio by weight of Fe₂O₃ to ZnO is 9.8, the Curie temperature is about 220°C, and saturation magnetic flux density at 0°C is about 540 mT.

Line C shows a temperature rise characteristic of another conventional heat generation layer as a comparison example, as a temperature rise characteristic of a food placing face of a grill pan in which heat generation layer 3 made of the microwave heat generator is formed by a composition obtained by adding a dielectric material to same ferrite powders 7 as those of the heat generation layer having the characteristic of line B.

The imaginary part of the complex relative permeability up to 200°C of heat generation layer 3 of the exemplary embodiment having the characteristic of line A is about 69% of that of the complex relative permeability at room temperature, and is 41% in the case of the heat generation layer having the temperature rise characteristic of line B.

As shown in FIG. 6, the temperature of the food placing face of grill pan 1 having heat generation layer 3 (line A) of the exemplary embodiment is high in temperature rise speed. It reaches 230°C or higher in two minutes of heating time, reaches about 270 °C in three minutes, and tends to saturate at about 280 °C in five minutes or longer.

On the other hand, the temperature rise speed of the food placing face of the grill pan provided with the heat generation layer having the characteristic of line B is almost equivalent to that of heat generation layer 3 (line A) of the exemplary embodiment until one minute of heating time, becomes slower after that, and tends to saturate at about 250°C in five minutes or longer.

This is because the saturation magnetic flux density at 0°C of heat generation layer 3 (line A) of the exemplary embodiment and the imaginary part of the complex relative permeability up to 200°C to the imaginary part of the complex relative permeability at room temperature are higher and deterioration in the heat generation performance due to the magnetic loss is smaller as compared with the heat generation layer having the characteristic of line B, and the Curie temperature of ferrite powders 7 used for heat generation layer 3 (line A) of the embodiment is higher than that of the ferrite powders used for the heat generation layer having the characteristic of line B.

The reason why the temperature of the grill pan provided with the heat generation layer having the characteristic of line B rises to the temperature of about 250°C although the Curie temperature of the ferrite powders is about 220°C is considered that heat generation due to the dielectric loss occurs due to composition of the Mn-Zn-based ferrite powders used or impurity.

Further, the temperature rise speed of the food placing face of the grill pan provided with the heat generation layer having the characteristic of line C is almost equivalent to that of line B when the heating time is within three minutes, the temperature increases gradually in longer heating time, and the temperature of the food placing face tends not to saturate.

Since the heat generation layer having the characteristic of line C is made of the same ferrite powders as those of the heat generation layer having the characteristic of line B, the initial temperature rise characteristic is the same as that of line B. It is considered that, however, since dielectric powders are added to the heat generation layer having the characteristic of line C, a dielectric loss of the dielectric powders appears, and the temperature rise value becomes higher than that of the heat generation layer having the characteristic of line B.

The reason why the temperature of the food placing face does not saturate in line C is considered that the Curie temperature of the added dielectric powders is high, and heat generation due to absorption of the microwave energy is maintained.

When the temperature of the food placing face becomes high as in line C, the performance of the grill pan cooking improves. However, since the temperature of the food placing face does not saturate, if the heating time is extended, there is the possibility that the temperature exceeds the allowable heat resistant temperature of the material of the grill pan and durability deteriorates.

As described above, heat generation layer 3 made of the microwave heat generator is formed by using Mn-Zn-based ferrite powders 7 containing Fe₂O₃, MnO, and ZnO, whose Curie temperature is about 290°C, and whose saturation magnetic flux density at 0°C is about 550 mT, in which the ratio by weight of Fe₂O₃ to ZnO is 15.5, so that the temperature of the food placing face can be increased in short time, and the excellent performance of the grill pan cooking can be realized.

Since the temperature of the food placing face can be saturated at the Curie temperature or less by using ferrite powders 7 whose Curie temperature is 290°C, the allowable heat resistant temperature of the material of grill pan 1 can be assured, and excellent durability can be realized.

Further, even when the electric field is collected in a part of heat generation layer 3 for some reason and abnormal heat generation occurs, temperature rise exceeding the Curie temperature of ferrite powders 7 can be prevented. Consequently, smoke generation and firing of the rubber material in heat generation layer 3 can be prevented, so that safety can be also improved.

Although the embodiment has been described by the example in which the range of the ratio by weight of Fe₂O₃ to ZnO is 11 to 24 in ferrite and the saturation temperature in a state where no food is placed on the placing face is 240°C to 300°C, the invention is not limited to the example. For example, as long as the saturation temperature in a state where no food is placed on the placing face can be set to 240°C to 300°C, the range of the ratio by weight of Fe₂O₃ to ZnO does not have to be 11 to 24. That is, the saturation temperature of 240°C to 300°C may be realized in a state where no food is placed on the placing face by the heat generating material, the composition used as heat generation layer 3 of grill pan 1 or the temperature control.

### SECOND EXEMPLARY EMBODIMENT

FIG. 7 is a partial cross section showing a detailed structure of grill pan 1 in which heat generation layer 3 made of a microwave heat generator is formed in a second exemplary embodiment of the present invention.

The points different from the first exemplary embodiment are a point that coating layer 26 whose infrared emissivity is 0.9 or higher is provided in place of fluorine coating layer 6 and a point that heat generation layer 3 is directly formed on base member 4, and the other materials are the same as those of the first exemplary embodiment.

In FIG. 7, supporting member 25 has a configuration that base member 4 and coating layer 26 whose infrared emissivity is 0.9 or higher, which is formed on base member 4 on the side (surface 2A) on which food is placed are formed. Heat generation layer 3 made of the microwave heat generator is formed on the surface of base member 4 of surface 2B different from surface 2A on the side food is placed. As base member 4, an iron plate or a surface-treated steel plate on which aluminum or zinc is plated is applied.

In grill pan 1 used in the first exemplary embodiment, the infrared emissivity of the surface of fluorine coating layer 6 is about 0.8 when the temperature of the food placing face is set to 200°C to 250°C in the wavelength range of 2 µm to 20 µm.

As shown in FIG. 1, grill pan 1 has grooves 2C in the food placing face so as to separate fat and the like from food. However, grooves 2C are not in contact with food, so that heat of heat generation layer 3 of the microwave heat generator is not easily transmitted to food, and the food finishing state deteriorates due to occurrence of non-uniform browning.

According to the second exemplary embodiment, by providing the food placing face (surface 2A) of grill pan 1 with coating layer 26 whose infrared emissivity is 0.9 or higher in place of fluorine coating layer 6, emissivity of the food placing face (surface 2A) heated by heat generation layer 3 of the microwave heat generator can be increased. Consequently, a part of food (grooves 3C in grill pan 1) which is not in contact with the placing face (surface 2A) can be heated by radiation heat, so that the food cooking performance can be improved.

Coating layer 26 whose infrared emissivity is 0.9 or higher of the second exemplary embodiment is preferably made of a ceramic material or glass material (enamel) whose main component is silica.

Since silica has a characteristic of transmitting microwaves, microwave energy transmitted to the food placing face side (surface 2A side) of grill pan 1 of coating layer 26 is not absorbed. Consequently, decrease in the absorption amount of the microwave energy by food is prevented, so that the cooking performance can be improved.

By making coating layer 26 of the ceramic material or glass material whose main component is silica, the allowable heat resistant temperature of the material of grill pan 1 can be improved. Accordingly, the temperature of the food placing face (surface 2A) of grill pan 1 can be made higher, so that the performance of the grill pan cooking can be further improved.

In addition, the hardness of the surface of coating layer 26 can be increased. Therefore, even when a metal spatula is used at the time of taking food out or a hard nylon scrubber is used at the time of washing grill pan 1, a scratch or peeling does not occur in coating layer 26, and excellent durability can be realized.

Further, it is also useful to give grime resistance to coating layer 26. By the antifouling property, sticking of food itself, fat from food, seasoning used for cooking, and the like at the time of cooking can be reduced. Therefore, handling such as cleaning of grill pan 1 is further facilitated, and grime resistance of grill pan 1 can be improved.

There are two ways to express the grime resistance. One of the ways is to provide the food placing face (surface 2A) with water-repellent property to reduce the amount of adhesion of contaminant and adhesion energy of contaminant, thereby facilitating cleaning. Coating layer 26 can be provided with the grime resistance by water-repellent property by adding an organic component such as silicone oil which is safe from the viewpoint of health (food hygiene) to the base material of coating layer 26.

The grime resistance other than water-repellent property can be also realized by forming small roughness (concavity and convexity) in the surface of coating layer 26. Formation of the small roughness can be realized by controlling the sintering condition of coating layer 26 or the formation condition such as choice of an organic material.

Another way is to provide the food placing face (surface 2A) with hydrophilic property which is opposite to the water-repellent property so that water used for cleaning easily penetrates between an adhered contaminant and the food placing face (surface 2A) and the contaminant is easily taken off. Coating layer 26 can be provided with the grime resistance by the hydrophilic property by adding a material which reduces the surface energy to the base material of coating layer 26.

In the second exemplary embodiment, heat generation layer 3 made of the microwave heat generator is provided directly on surface 2B of base member 4. The present invention, however, is not limited to the configuration. It is also possible to provide coating layer 5 described in the first exemplary embodiment or another coating layer having heat resistance in order to improve corrosion resistance of base member 4 and form heat generation layer 3 on the coating layer.

In the first and second exemplary embodiments, for heat generation layer 3 made of the microwave heat generator, a rubber material, particularly, silicone rubber is used as organic compound 8. Except for the material, a material used for coating layer 26 such as an inorganic binder of frit, alumina sol, or silica sol used in enamel can be also used.

By using the material for heat generation layer 3, the allowable heat resistant temperature of the grill pan can be made higher than that of grill pan 1 described in the first exemplary embodiment, and durability and reliability can be further improved.

By using a material used for coating layer 26 such as an inorganic binder of frit, alumina sol, silica sol, or the like used in enamel in place of organic compound 8 of heat generation layer 3, the material of the grill pan can be made incombustible. Therefore, in addition to durability, safety can be also improved.

To improve further durability of heat generation layer 3 made of the microwave heat generator, a protection layer made of a material having high permeability to the microwave may be provided on heat generation layer 3. Examples of the material of the protection layer include an inorganic binder of frit, alumina sol, silica sol, or the like used in above described enamel and a material used for coating layer 26.

As described above, the cooking apparatus of the present invention has a base member having a placing face on which food is placed, and a heat generation layer made of a microwave heat generator containing ferrite which absorbs microwave energy and generates heat, and has a configuration that the ferrite contains Fe₂O₃, MnO, and ZnO, and a ratio by weight of the Fe₂O₃ to the ZnO lies in a range of 11 to 24.

With such a configuration, the Curie temperature of ferrite can be made high, and the temperature of the placing face of the grill pan can be made high. Therefore, cooking time of the grill pan cooking can be shortened, and the performance of the grill pan cooking can be improved.

When the temperature of ferrite becomes around the Curie temperature, autogenous control is performed so that the absorption amount of the microwave energy is reduced. Consequently, the temperature of the grill pan as a cooking apparatus can be saturated at the allowable heat resistant temperature of the material or less. Therefore, breakage and firing of the material of the grill pan and fire spreading to other members caused by excessive temperature rise can be prevented, and safety, durability, and reliability can be improved.

Further, since a safety device for preventing excessive temperature rise of the grill pan is not necessary, no complicated electronic control and control device is required. Consequently, lower cost can be realized.

The cooking apparatus of the present invention has a base member having a placing face on which food is placed, and a heat generation layer made of a microwave heat generator containing ferrite which absorbs microwave energy and generates heat, and temperature of the placing face is set to saturate from 240°C to 300°C in a state where no food is placed thereon.

With the configuration, since the saturation temperature of the food placing face is designed to high temperature, the temperature can be increased to predetermined cooking temperature in short time, and cooking time can be shortened.

Further, food can be appropriately browned without being dried, and the performance of the grill pan cooking at high temperature can be improved.

By setting the highest temperature at which the food placing face saturates in a state where no food is placed to 300°C, the temperature of the grill pan as a cooking apparatus can be set to equal to or less than the allowable heat resistant temperature of the material. Therefore, deterioration or breakage of the material of the grill pan can be prevented, and safety, durability, and reliability can be improved.

In the present invention, the heat generation layer contains particles of ferrite and an organic compound. With such a configuration, the heat generation layer made of the microwave heat generator containing ferrite can be easily formed in the grill pan.

Since firm adhesion between the base member of the grill pan as a cooking apparatus and the heat generation layer can be realized by the organic compound, durability can be improved.

Since the heat generation layer can be formed at relatively low temperature, deterioration in the material of the grill pan can be prevented.

In the present invention, the organic compound contained in the heat generation layer is silicone rubber.

With such a configuration, heat resistance of the heat generation layer can be improved, and more excellent adhesion between the grill pan and the heat generation layer can be realized.

In addition, since the heat generation layer can be made thick, the amount of ferrite necessary to absorb the microwave can be increased, and the microwave heat generator having fast temperature rise speed can be realized.

In the present invention, an imaginary part of complex relative permeability up to 200°C has at least 50% of an imaginary part of complex relative permeability at room temperature.

With such a configuration, also in a process that the temperature of the heat generation layer increases, decrease in the microwave absorption of the heat generation layer itself can be suppressed. Consequently, decrease in the temperature rise speed of the heat generation layer is suppressed, and the temperature of the placing face of the grill pan as a cooking apparatus can be increased to high temperature in short time.

In the present invention, an area of the heat generation layer is equal to or smaller than 0.1 m²,

With such a configuration, even when the grill pan as a cooking apparatus is heated by the microwave output of around 800 W which is usually used, increase in the heat capacity of the grill pan or the amount of heat radiation from the heated grill pan can be suppressed. Therefore, the temperature can be increased to predetermined temperature in short time, so that cooking time can be shortened, and energy can be saved.

In addition, since the temperature which saturates by the balance between heat generation and heat radiation can be easily set so as to be around the Curie temperature of ferrite and lower than the Curie temperature without decreasing the temperature rise speed, the grill pan with excellent cooking performance can be realized.

In the present invention, thermal conductivity of the base member is in a range of 50 to 150 W/mK.

With such a configuration, thermal transmission to places other than the food placing face of the grill pan caused when thermal conductivity is too high, increase in the amount of heat radiation caused by enlargement of the heat radiation area, and non-uniformity of the temperature distribution of the food placing face caused when the thermal conductivity is too low can be suppressed. Thus, the grill pan with excellent food heating efficiency can be realized.

In the present invention, a coating layer made of a material whose infrared emissivity is higher than that of the base member is formed on the placing face on which the food is placed.

With such a configuration, the radiation amount of heat of the placing face which is heated by heat generated by the heat generation layer made of the microwave heat generator can be increased. Therefore, a part of food which is not in contact with the placing face can be heated by radiation, and the food cooking performance can be improved.

In the present invention, grime resistance is given to the coating layer. With such a configuration, sticking of contaminant such as food itself, fat from food, seasoning, and the like can be suppressed, and handling such as cleaning of the grill pan can be performed easily. Therefore, the cooking apparatus can be always maintained in a clean state.

In the present invention, the coating layer contains silica. With such a configuration, heat resistance of the coating layer can be improved, and the temperature of the placing face of the grill pan can be further increased. Therefore, the performance and durability of the grill pan cooking can be further improved.

Since hardness of the coating layer can be increased, even when a metal spatula is used at the time of taking food out or a hard nylon scrubber is used at the time of washing the grill pan, occurrence of a scratch or peeling in the coating layer can be prevented, and excellent durability can be realized.

The present invention also provides a heating device having: a heating chamber; a microwave generator for supplying microwave into the heating chamber; and the cooking apparatus disposed in the heating chamber.

With such a configuration, the performance of the grill pan cooking in the heating device can be improved.

### INDUSTRIAL APPLICABILITY

With the cooking apparatus of the present invention, the performance of grill pan cooking can be improved. Consequently, the cooking apparatus can be applied to a microwave heating device such as a microwave oven, and the heat generation layer whose main component is a microwave heat generator can be applied as a microwave heating device for devices such as a drier other than a cooking device.

### REFERENCE MARKS IN THE DRAWINGS

- 1, 24, 101: grill pan
- 2, 25: supporting member
- 2A, 2B: surface
- 2C: groove
- 2D: end part
- 2E: center part
- 3, 102: heat generation layer
- 3C: groove
- 4: base member
- 5, 26: coating layer
- 6: fluorine coating layer
- 7: ferrite powder
- 8: organic compound
- 9: heating chamber
- 10: right sidewall face
- 11: left sidewall face
- 12: deepest wall face
- 13: top face
- 14: bottom face
- 15: magnetron
- 16: waveguide
- 17: microwave radiator
- 18: sealing part
- 19: heater
- 20: rail
- 21: thermister
- 22: infrared sensor
- 23: controller
- 40: heating device
- 103: placing face

## Claims

1. A cooking apparatus (1; 24) comprising a base member (4) having a placing face on which food is placed, and a heat generation layer (3) made of a microwave heat generator containing ferrite (7) which absorbs microwave energy and generates heat,
wherein the ferrite (7) contains Fe₂O₃, MnO, and ZnO,
**characterized in that**:
a ratio by weight of the Fe₂O₃ to the ZnO lies in a range of 11 to 24.

2. The cooking apparatus (1; 24) according to claim 1, wherein temperature of the placing face is set to saturate from 240°C to 300°C in a state where the food is not placed thereon.

3. The cooking apparatus (1; 24) according to claim 1, wherein the heat generation layer (3) contains particles of ferrite (7) and an organic compound (8).

4. The cooking apparatus according to claim 3, wherein the organic compound (8) contained in the heat generation layer (3) is silicone rubber.

5. The cooking apparatus (1; 24) according to claim 1, wherein in the heat generation layer (3), an imaginary part of complex relative permeability up to 200°C has at least 50% of an imaginary part of complex relative permeability at room temperature.

6. The cooking apparatus (1; 24) according to claim 1, wherein an area of the heat generation layer (3) is equal to or smaller than 0.1 m².

7. The cooking apparatus (1; 24) according to claim 1, wherein thermal conductivity of the base member (4) is in a range of 50 to 150 W/m K.

8. The cooking apparatus (1; 24) according to claim 1, wherein a coating layer (5; 26) made of a material whose infrared emissivity is higher than that of the base member (4) is formed on the placing face on which the food is placed.

9. The cooking apparatus (1; 24) according to claim 8, wherein grime resistance is given to the coating layer (5; 26).

10. The cooking apparatus (1; 24) according to any one of claims 8 and 9, wherein the coating layer (5; 26) contains silica.

11. A heating device comprising:
a heating chamber (9);
a microwave generator (15) for supplying microwave into the heating chamber (9); and
the cooking apparatus (1; 24) according to any one of claims 1 to 9, which is disposed in the heating chamber (9).

## Patentansprüche

1. Kochvorrichtung (1; 24) aufweisend ein Basisglied (4) mit einer Platzierfläche auf welcher Nahrung platziert wird, und eine Wärmeerzeugungsschicht (3), die aus einem mikrowellenwärmeerzeugungsbeinhaltenden Ferrit (7) gemacht ist, welche Mikrowellenenergie absorbiert und Wärme erzeugt,
wobei das Ferrit (7) Fe₂O₃, Mn, und ZnO beinhaltet,
**dadurch gekennzeichnet dass**: ein Gewichtsverhältnis des Fe₂O₃ zu dem ZnO im Bereich von 11 bis 24 liegt.

2. Kochvorrichtung (1; 24) nach Anspruch 1, wobei die Temperatur der Platzierfläche eingestellt ist, um 240°C bis 300°C in einem Zustand zu erfüllen, wo bzw. in dem die Nahrung darauf nicht platziert ist.

3. Kochvorrichtung (1; 24) nach Anspruch 1, wobei die Wärmeerzeugungsschicht (3) Partikel von Ferrit bzw. Ferritpartikel (7) und einen organischen Stoff bzw. eine organische Mischung (8) beinhaltet.

4. Kochvorrichtung nach Anspruch 3, wobei der organische Stoff bzw. die organische Verbindung (8), der bzw. die in der Wärmeerzeugungsschicht (3) beinhaltet ist, Silikongummi ist.

5. Kochvorrichtung (1; 24) nach Anspruch 1, wobei in der Wärmeerzeugungsschicht (3) ein imaginärer Teil einer komplexen relativen Permeabilität bis zu 200°C zumindest 50% von einem imaginären Teil einer komplexen relativen Permeabilität bei Raumtemperatur aufweist.

6. Kochvorrichtung (1; 24) nach Anspruch 1, wobei ein Bereich der Wärmerzeugungsschicht (3) gleich oder kleiner als 0,1 m² ist.

7. Kochvorrichtung (1; 24) nach Anspruch 1, wobei die thermale Konduktivität des Basisglieds (4) in einem Bereich von 50 bis 150 W/m · K ist.

8. Kochvorrichtung (1; 24) nach Anspruch 1, wobei eine Beschichtungsschicht (5; 26), die aus einem Material gemacht ist, dessen Infrarotemissionsgrad höher ist als jener des Basisglieds (4), auf der Platzierfläche ausgebildet ist, auf welcher die Nahrung platziert ist bzw. wird.

9. Kochvorrichtung (1; 24) nach Anspruch 8, wobei der Beschichtungsschicht (5; 26) ein Schmutzwiderstand gegeben bzw. hinzugefügt ist.

10. Kochvorrichtung (1; 24) nach irgendeinem der Ansprüche 8 und 9, wobei die Beschichtungsschicht (5; 26) Silica beinhaltet.

11. Erwärmungsvorrichtung, die aufweist:
eine Erwärmungskammer (9);
einen Mikrowellengenerator (15) zum Zuführen einer Mikrowelle bzw. von Mikrowellen in die Erwärmungskammer (9); und
die Kochvorrichtung (1; 24) nach irgendeinem der Ansprüche 1 bis 9, welche in der Erwärmungskammer (9) angeordnet ist.

## Revendications

1. Appareil de cuisson (1 ; 24) comprenant un élément de base (4) comportant une face de positionnement sur laquelle de la nourriture est positionnée, et une couche de génération de chaleur (3) faite d'un générateur de chaleur à micro-ondes contenant de la ferrite (7) qui absorbe de l'énergie de micro-ondes et génère de la chaleur,
dans lequel la ferrite (7) contient Fe₂O₃, MnO, et ZnO,
**caractérisé en ce que** :
un rapport en poids de Fe₂O₃ par rapport à ZnO se trouve dans une plage de 11 à 24.

2. Appareil de cuisson (1 ; 24) selon la revendication 1, dans lequel une température de la face de positionnement est réglée pour être saturée de 240 °C à 300 °C dans un état où de la nourriture n'est pas positionnée sur celle-ci.

3. Appareil de cuisson (1 ; 24) selon la revendication 1, dans lequel la couche de génération de chaleur (3) contient des particules de ferrite (7) et un composé organique (8).

4. Appareil de cuisson selon la revendication 3, dans lequel le composé organique (8) contenu dans la couche de génération de chaleur (3) est du caoutchouc de silicone.

5. Appareil de cuisson (1 ; 24) selon la revendication 1, dans lequel, dans la couche de génération de chaleur (3), une partie imaginaire de perméabilité relative complexe jusqu'à 200 °C possède au moins 50 % d'une partie imaginaire de perméabilité relative complexe à température ambiante.

6. Appareil de cuisson (1 ; 24) selon la revendication 1, dans lequel une superficie de la couche de génération de chaleur (3) est égale ou inférieure à 0,1 m².

7. Appareil de cuisson (1 ; 24) selon la revendication 1, dans lequel la conductivité thermique de l'élément de base (4) est dans une plage de 50 à 150 W/m-K.

8. Appareil de cuisson (1 ; 24) selon la revendication 1, dans lequel une couche de revêtement (5 ; 26) faite d'un matériau dont l'émissivité infrarouge est supérieure à celle de l'élément de base (4) est formée sur la face de positionnement sur laquelle la nourriture est positionnée.

9. Appareil de cuisson (1 ; 24) selon la revendication 8, dans lequel une résistance à la saleté est donnée à la couche de revêtement (5 ; 26).

10. Appareil de cuisson (1 ; 24) selon une quelconque des revendications 8 et 9, dans lequel la couche de revêtement (5 ; 26) contient de la silice.

11. Dispositif chauffant, comprenant :
une chambre chauffante (9) ;
un générateur à micro-ondes (15) pour fournir des micro-ondes dans la chambre chauffante (9) ; et
l'appareil de cuisson (1 ; 24) selon une quelconque des revendications 1 à 9, qui est disposé dans la chambre chauffante (9).
